**Europäisches Patentamt**

**European Patent Office**

**Office européen des brevets**

(19)

(11) Numéro de publication : **0 329 542 B1**

# (12) FASCICULE DE BREVET EUROPEEN

(45) Date de publication du fascicule du brevet :
06.05.92 Bulletin 92/19

(51) Int. Cl.⁵ : **B62D 1/04**

(21) Numéro de dépôt : **89400402.7**

(22) Date de dépôt : **13.02.89**

(54) **Procédé de fabrication d'un volant de direction, notamment pour véhicule automobile.**

(30) Priorité : **19.02.88 FR 8802040**

(43) Date de publication de la demande :
**23.08.89 Bulletin 89/34**

(45) Mention de la délivrance du brevet :
**06.05.92 Bulletin 92/19**

(84) Etats contractants désignés :
**DE ES GB IT**

(56) Documents cités :
**EP-A- 0 027 293**
**EP-A- 0 255 171**
**FR-A- 2 153 670**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Robert, Martine**
**17 rue Charles Allemand**
**F-25400-Audincourt (FR)**
Inventeur : **Henigue, Christian**
**6, rue des Vosges Suarce**
**F-90000-Delle (FR)**

(74) Mandataire : **Mestre, Jean et al**
**c/o CABINET LAVOIX 2, place d'Estienne d'Orves**
**F-75441 Paris Cédex 09 (FR)**

**Description**

La présente invention concerne les volants de direction notamment pour véhicule automobile et, plus particulièrement, ceux d'entre eux qui comprennent des parties métalliques et des parties en matières synthétiques surmoulées.

Les volants de direction, notamment d'automobile, doivent satisfaire à des exigences contradictoires.

Par exemple, ils doivent être relativement légers afin d'avoir une masse réduite et un petit moment d'inertie par rapport à l'axe de la colonne de direction pour des raisons notamment de confort. La petite masse fait que lorsque le véhicule circule à grande vitesse ou sur des chaussées en mauvais état, le volant ne vibre pas. Le petit moment d'inertie facilite les braquages de manoeuvre et les changements de direction lorsque le véhicule est utilisé.

En outre, pour des raisons de sécurité, il faut que le volant soit apte à supporter des déformations importantes résultant d'effort en cas de choc violent notamment frontal. En particulier, si le thorax du conducteur vient à rencontrer le volant, il ne faut pas que celui-ci occasionne des blessures par contusions ou provoque des plaies par coupures ou perforations.

On voit donc qu'il n'est pas aisé de fabriquer un volant d'automobile que satifasse toutes ces contraintes et qui soit aussi d'un coût de revient relativement modique.

En plus de ces contraintes techniques, il y a lieu d'ajouter des impératifs d'ordre esthétique car le volant doit être d'un aspect chatoyant à l'oeil et d'un contact agréable au toucher, tout en satisfaisant aux tendances de la mode.

Selon la technique antérieure on a déjà proposé diverses solutions pour construire des volants qui satisfont à la plupart de ces exigences.

Un volant comprend, essentiellement, un moyeu central et une jante périphérique qui sont reliés l'un à l'autre par au moins un bras ou une branche, approximativement radial.

La plupart du temps de tels volants, outre le moyeu qui est généralement en métal, comprennent d'autres composants métalliques. La tendance actuelle consiste à utiliser un tel moyeu métallique et à lui associer des jante et branches à armatures ou renforts métalliques, habituellement recouverts de matière synthétique afin de satisfaire à la fois aux contraintes mécaniques et de sécurité et aussi de présentation.

Comme exposé dans la demande de brevet français 2 518 479, on utilise un moyeu métallique auquel sont associées des branches et une jante obtenues par une technique de moulage à double injection au cours de laquelle on fabrique d'abord la partie extérieure en matière plastique dans laquelle est injectée une autre matière plastique chargée qui sert de noyau.

Selon une autre technique qui fait l'objet de la demande de brevet européen 0 139 015, on fabrique un volant à moyeu et branches métalliques auquel on associe une jante faite en matière plastique chargée de fibres continues.

Selon une autre technique décrite dans la demande de brevet européen 0 173 826, on utilise pour les branches et la jante des fibres longues continues noyées dans une résine que l'on bobine et auxquelles on associe des manchons métalliques fendus qui permettent un enroulement approprié des fibres tout en évitant le clivage de leurs différentes nappes dans les zones où elles divergent.

Selon une autre technique exposée dans la demande de brevet français FR-A-2620996, on fabrique un volant qui, à l'exception de son moyeu central métallique, est fait d'au moins une matière synthétique chargée de fibres longues et utilisée à l'état de demi-produit sous forme de flans chargés sur chant dans un moule et conformés par estampage.

Le document EP-A-0 255 171 décrit une technique de fabrication d'un volant dont le moyeu central, la jante périphérique et la branche qui les relie sont faits à base d'une résine polyamide moulée par injection.

Le but de l'invention est de fabriquer un volant perfectionné de direction, notamment pour véhicule automobile, quine comprend que deux pièces métalliques afin de satisfaire à toutes les contraintes habituelles.

Dans le présent texte on désigne par volant la partie interne de ce dernier qui a ion rôle mécanique à l'exclusion de tous revêtements extérieurs ultérieurs qui lui confèrent son aspect final agréable à la vue et au toucher.

L'invention a pour objet un procédé de fabrication d'un volant de direction pour véhicule automobile dont les éléments divulgués par le document EP 0 255 171 figurent dans le préambule de la revendication principale et dont les particularités distinctives sont exposées notamment dans la partie caractérisante de celle-ci.

D'autres caractéristiques de l'invention apparaîtront à la lecture de la description et des revendications qui suivent et à l'examen du dessin annexé donné seulement à titre d'exemple, ou:

– la Fig.1A est une vue de dessus d'un mode de réalisation d'un volant suivant l'invention ;

– la Fig.1B est une coupe méridienne de la Fig.1A ;

– la Fig.1C est une section locale de la Fig.1A suivant le plan C de la Fig.IA ;

– la Fig.2A est une vue de dessus d'une autre variante de réalisation d'un volant suivant l'invention ; et

– la Fig.2B est une section méridienne de la Fig.2A.

Les volants notamment d'automobiles étant bien connus dans la technique, la description qui suit ne porte que sur ce qui se rapporte directement a l'invention. Pour le surplus le spécialiste de la technique considérée puisera dans les solutions classiques à sa disposition pour faire face aux problèmes particuliers auxquels il est confronté.

Dans la description qui suit, on utilisera toujours le même numéro de référence pour désigner un élément homologue, quel que soit le mode de réalisation.

Comme on le voit sur les figures du dessin, le volant suivant l'invention est constitué d'un moyeu 10 et d'une jante 20 réunis l'un à l'autre par au moins une branche ou bras 30, approximativement radialement.

Comme il est classique, le moyeu 10 est métallique et présente une configuration qui permet de le monter sur l'embout de l'extrémité de la colonne de direction qui est disposée dans l'habitacle. Ce moyeu est pourvu de tous les moyens de fixation habituels notamment à vis et écrou et à cônes à coïncement. S'il y a lieu, le moyeu est équipé d'un absorbeur d'énergie qui permet d'améliorer les conditions de sécurité. Ce moyeu peut être aussi équipé d'un dispositif de réglage fin de son calage angulaire afin de parfaire l'orientation du volant pour des raisons d'ordre esthétique.

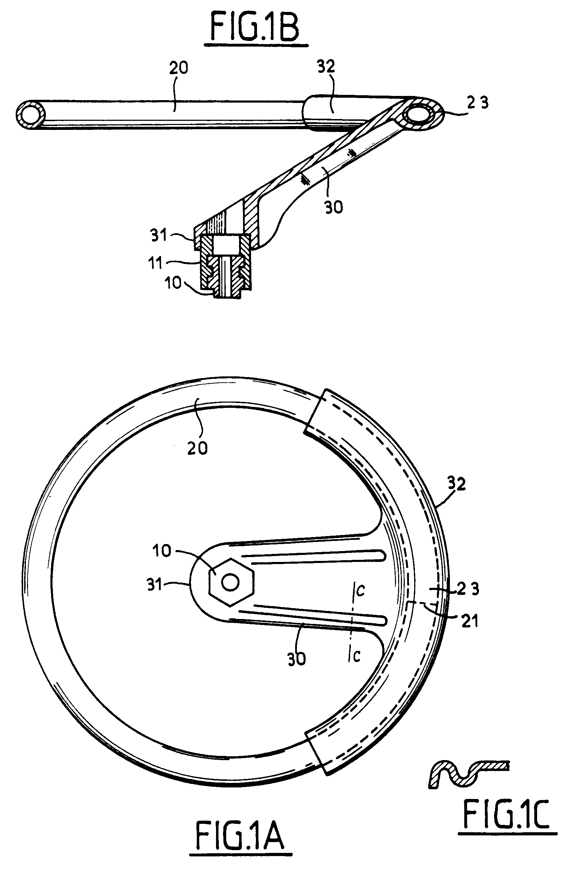

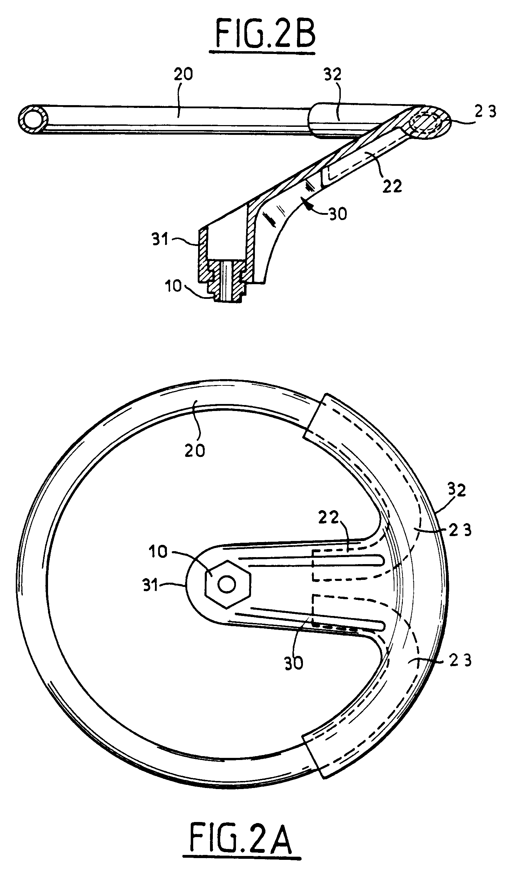

La jante 20 présente une configuration approximativement circulaire. Elle est faite, par exemple, d'un tube métallique en acier ou en aluminium. Les extrémités 21 en vis-à-vis de la jante sont laissées ainsi, ou s'il y a lieu, aboutées par soudage comme cela est illustré sur le mode de réalisation de la Fig. 1. Dans le cas où la jante est discontinue, on peut faire en sorte qu'elle se prolonge par des jambes 22 cintrées, approximativement centripètes, comme il est illustré sur le mode de réalisation de la Fig. 2.

Ce moyeu 10 et cette jante 20 sont réunis l'un à l'autre par au moins une branche 30, approximativement radiale, faite en au moins une matière synthétique. Comme on le voit, cette branche 30 comprend un fourreau 31 qui enveloppe le moyeu 10 et une gaine 32 qui recouvrent au moins localement la jante 20.

Comme on peut l'observer sur les sections méridiennes des modes de réalisation des Fig. 1 et 2, la jante 20 est déformée dans une zone 23 qui est recouverte, au moins localement, par la gaine 32 de la branche 30. On donne à cette zone 23 une section droite différente de celle du reste de la jante. De préférence, la section 23 dans cette zone est à profil non circulaire par exemple elliptique comme dessiné de manière à obtenir un bon ancrage de la jante et de la branche.

La branche 30 est obtenue directement par surmoulage du moyeu 10 et de la jante 20. Pour ce faire, on utilise de préférence des matières synthétiques qui se présentent sous forme de demi-produits par exemple thermoplastiques (TRE), thermodurcissables (SMC). Ce surmoulage est obtenu en une seule opération.

Cette opération fait appel à la compression plutôt qu'à l'injection. Ceci permet d'avoir des matériaux isotropes dont la matière est, si nécessaire, renforcée à l'aide de fibres diverses, longues ou non, continues ou non, ou d'autres charges par exemple minérales ou organiques. Lorsqu'on opère sur un TRE on procède avec une pression de 200 bars environ, une température de matériau de 220°C environ et une température de moule de 50 à 60°C environ. Lorsqu'on opère sur une SMC, on procède avec une pression de 100 bars environ, une température de matériau de l'ordre de celle de l'ambiante et une température de moule de l'ordre de 140 à 145°C environ.

Au besoin des charges appropriées sont incorporées à la matière synthétique.

Le mode de réalisation de la Fig. 1 comprend un absorbeur d'énergie 11.

Pour que la liaison d'une telle branche avec la jante et le moyeu soit bien assurée, on peut les munir de cannelures, rainures, gorges, striures, molletages ou bien on peut aussi en modifier l'état de surface afin que la cohésion entre les différents matériaux utilisés soit la plus parfaite possible.

Ainsi le volant suivant l'invention présente des assemblages au niveau des jonctions des matériaux différents qui répondent à toutes les prescriptions des normes notamment en matière de sécurité et qui concernent les chocs et les essais de fatigue ou flexions alternées.

On voit donc tout l'intérêt que présente le volant suivant l'invention et tous les avantages qu'il apporte puisqu'il ne comprend que deux pièces métalliques, le moyeu et la jante qui sont reliés l'un à l'autre par au moins une branche faite par surmoulage direct d'au moins une matière synthétique appropriée, s'il y a lieu renforcée par des charges telles que des fibres minérales ou métalliques.

**Revendications**

1. Procédé de fabrication d'un volant de direction pour véhicule automobile constitué, entre autres, d'un moyeu central métallique, d'une jante périphérique métallique et d'au moins une branche approximativement radiale qui relie ces moyeu et jante et qui comprend un fourreau qui enveloppe le moyeu et une graine qui recouvre au moins localement la jante et qui est la seule partie faite en matière synthétique, procédé caractérisé en ce qu'on utilise une matière synthétique se présentant à l'état de demi-produit et en ce qu'on moule par compression en une opération unique cette matière synthétique pour obtenir directement une branche d'un seul tenant avec ses fourreau et gaine fixés à ces moyeu et jante, respectivement.

2. Procédé selon la revendication 1, caractérisé en ce qu'on utilise pour la branche une matière synthétique thermoplastique (TRE).

3. Procédé selon la revendication 1, caractérisé en ce qu'on utilise pour la branche une matière synthétique thermodurcissable (SMC).

4. Procédé selon l'une quelconque des revendications 1 à 3, caractérisé en ce qu'on utilise une matière plastique à l'état de demi-produit garni de préférence de fibres longues ou continues.

5. Procédé selon l'une quelconque des revendications précédentes, caractérisé en ce qu-on déforme la jante au moins dans la sone destinée à être recouverte par la gaine afin de lui donner une section droite non circulaire.

6. Procédé selon l'une quelconque des revendications précédentes, caractérisé en ce qu'on utilise une jante tubulaire.

7. Procédé selon l'une quelconque des revendications précédentes, caractérisé en ce qu'on utilise une jante continue.

8. Procédé selon la revendication 7, caractérisé en ce qu'on forme la jante continue par soudage de ses extrémités aboutées.

9. Procédé selon l'une quelconque des revendications 1 à 6, caractérisé en ce qu'on utilise une jante discontinue.

10. Procédé selon la revendication 9, caractérisé en ce qu'on utilise une jante qui se prolonge par des jambes cintrées approximativement centripètes.

## Patentansprüche

1. Verfahren zur Herstellung eines Lenkrads für ein Kraftfahrzeug, das unter anderem aus einer zentralen Nabe aus Metall, einer sich über den Umfang erstreckenden Felge aus Metall und mindestens einem annähernd radialen Arm besteht, der die Nabe und die Felge miteinander verbindet, eine die Nabe umhüllende Muffe und eine die Felge wenigstens örtlich bedeckende Umhüllung besitzt und das einzige aus Kunststoff hergestellte Teil ist, dadurch gekennzeichnet, daß ein Kunststoff verwendet wird, der im Zustand eines Halbprodukts vorliegt,und daß dieser Kunststoff in einem einzigen Arbeits preßgeformt wird, um direkt einen einstückigen Arm mit seiner Muffe und seiner Umhüllung zu erhalten, die an der Nabe bzw. an der Muffe befestigt sind.

2. Verfahren nach Anspruch 1, dadurch gekennzeichnet, daß für den Arm ein thermoplastischer Kunststoff (TRE) verwendet wird.

3. Verfahren nach Anspruch 1, dadurch gekennzeichnet, daß für den Arm ein wärmehärtender Kunststoff (SMC) verwendet wird.

4. Verfahren nach einem der Ansprüche 1 bis 3, dadurch gekennzeichnet, daß ein Kunststoff im Zustand eines Halbprodukts verwendet wird, das vorzugsweise mit langen oder kontinuierlichen Fasern bewehrt ist.

5. Verfahren nach einem der vorhergehenden Ansprüche, dadurch gekennzeichnet, daß die Felge wenigstens in der Zone verformt wird, die mit der Umhüllung bedeckt werden soll, um ihr einen nicht kreisförmigen querschnitt zu verleihen.

6. Verfahren nach einem der vorhergehenden Ansprüche, dadurch gekennzeichnet, daß eine rohrförmige Felge verwendet wird.

7. Verfahren nach einem der vorhergehenden Ansprüche, dadurch gekennzeichnet, daß eine kontinuierliche Felge verwendet wird.

8. Verfahren nach Anspruch 7, dadurch gekennzeichnet, daß die kontinuierliche Felge durch Verschweißen ihrer stumpf aneinandergefügten Enden gebildet wird.

9. Verfahren nach einem der Ansprüche 1 bis 6, dadurch gekennzeichnet, daß eine unkontinuierliche Felge verwendet wird.

10.Verfahren nach Anspruch 9, dadurch gekennzeichnet, daß eine Felge verwendet wird, die durch Schenkel verlängert ist, die annähernd zentripetal gebogen sind.

## Claims

1. A method of producing a steering wheel for a motor vehicle and consisting inter alia of a central metallic hub, a peripheral metallic rim and at least one substantially radial branch which connects the hub and the rim, and which comprises a lining which surrounds the hub and a sheath which at least locally covers the rim ans which is the only part which is made from a synthetic material, the said method being characterised in that a synthetic material is used which is in the semi-finished product state and in that the said synthetic material is moulded by compression in one single operation in order directly to obtain a branch which is one piece with its lining and sheath fixed to the said hub and rim respectively.

2. A method according to Claim 1, characterised in that a thermoplastic synthetic material (TRE) is used for the branch.

3. A method according to Claim 1, characterised in that a thermo-hardenable synthetic material (SMC) is used for the branch.

4. A method according to any one of Claims 1 to 3, characterised in that a plastics material in the semi-finished product state is used, which is preferably filled with long or continous fibres.

5. A method according to any one of the preceding Claims, characterised in that at least in the portion intended to be covered by the sheath, the rim is deformed in order to give it a non-circular cross-section.

6. A method according to any one of the preceding Claims, characterised in that a tubular rim is used.

7. A method according to any one of the preceding Claims, characterised in that a continous rim is used.

8. A method according to Claim 7, characterised in that the continous rim is formed by welding of its abutted ends.

9. A method according to any one of Claims 1 to 6, characterised in that a discontinuous rim is used.

10. A method according to Claim 9, characterised in that a rim is used which is extended by legs bent in a substantially centripetal direction.

## FIG.1B

## FIG.1A

## FIG.1C

## FIG.2B

## FIG.2A